# EUROPEAN PATENT SPECIFICATION

(11) **EP 2 876 330 B1**
(45) Date of publication and mention of the grant of the patent: **20.02.2019**
(21) Application number: 14193466.1
(22) Date of filing: 17.11.2014
(51) Int. Cl.: F16H 49/00, F16C 1/20

(54) **Universal flexible transmission**
Universelles flexibles Getriebe
Transmission souple universelle

(30) Priority: 21.11.2013 IT MI20131938
(43) Date of publication of application: 27.05.2015
(73) Proprietor: FINAN.CO. S.r.l, 20056 Trezzo Sull'Adda - Milano (IT)
(72) Inventor: Barbieri, Walter, 20056 TREZZO SULL'ADDA-MILANO (IT)
(74) Representative: Martegani, Franco

(56) References cited:
- US-A- 2 869 377

## Description

The present invention relates to a universal flexible transmission.

Various types of transmissions are currently used for transferring motion from one point of a car or device to another, for example with gears, chain, belts, of the mixed type, etc.

These known transmissions must have a precise starting point and a precise point of arrival, positioned at a certain distance and following a precise pre-established orientation.

In a gear transmission, for example, the first gear and last gear of the transmission must be positioned according to precise axes and with the presence of various supports. In the case of a number of gears, these require considerable space with relative supports, axes and the motion can be transmitted either by simple cascading (with parallel axes) or by means of bevel gears between axes at 90°.

In chain transmissions, restrictions are caused by the fact that the chain must be ring-arranged between toothed pulleys with parallel axes.

In belt transmissions, there is almost the same limitation as a good transmission requires belts wound onto pulleys with parallel axes.

Mixed transmissions can be created, which however entail limits of maintenance, compatibility and other more or less complex problems.

This causes limits of the intermediate supporting positions and start and end transmission positions of the driving axis and driven axis.

Furthermore, clearances are created in the above-mentioned transmissions, due to wear of the gears, pulleys, chains, etc. and also the stretching of some of the transmission components, such as the chains, belts, etc.

Another problem connected to the above-mentioned transmissions is that deriving from imperfect meshing and/or engagement between the parts, with the creation of harmful attrition and friction also for the duration of the same transmission.

Further general problems connected with the above-mentioned transmissions relate to the creation of vibrations, the necessity of having adequate screens and carters, etc.

Numerous attempts have been made in recent years in this respect for finding different solutions to the problem with respect to known solutions without reaching a satisfactory conclusion.

US 3 552 222 A describes a flexible transmission which comprises a tubular containment element in which balls are arranged in contact with each other.

Analogously, US 2 869 377 A, which constitutes the closest prior art, and US 3 718 051 also envisage similar arrangements to those of the prior document cited above.

A general objective of the present invention is to solve the drawbacks of the known art described above, in an extremely simple, economical and particularly functional manner.

A further objective of the present invention is to provide a universal flexible transmission which can transfer the motion between two points situated in space, which has no predetermined positioning limits.

Another objective of the present invention is to provide a universal flexible transmission which solves all problems of encumbrance and location of the parts of the transmission.

Yet another objective of the present invention is to provide a universal flexible transmission which allows motion to be transmitted between two parts that are movable with respect to each other, also with large displacements, wherein the parts could be a movable suspended body with respect to a chassis.

A further objective of the present invention is to provide a universal flexible transmission which is capable of transferring a continuous or discontinuous rotating motion, from a rotary driving axis, oriented in a generic direction in space, to a rotary driven axis, also positioned in space in a generic position.

Another objective of the present invention is to provide a universal flexible transmission which has a high mechanical performance without requiring frequent interventions for this purpose.

Yet another objective of the present invention is to provide a universal flexible transmission which is capable of absorbing variations in length and maintains a correct contact between all its components with time.

A final objective of the present invention is to provide a universal flexible transmission which is capable of transmitting a rotary or linear motion in any position in space.

In view of the above objectives, according to the present invention, a universal flexible transmission has been conceived having the characteristics specified in the enclosed claims.

The structural and functional characteristics of the present invention and its advantages with respect to the known art will appear even more evident from the following description referring to the enclosed drawings, which also illustrate some schematizations of embodiments of a universal flexible transmission produced according to the same invention. In the drawings:
- figure 1 shows a partially exploded, schematic perspective view of a universal flexible transmission according to the present invention, which transfers a rotating motion, from a rotary driving axis oriented in a generic direction in space, to a second rotary driven axis, also oriented in a generic position in space;

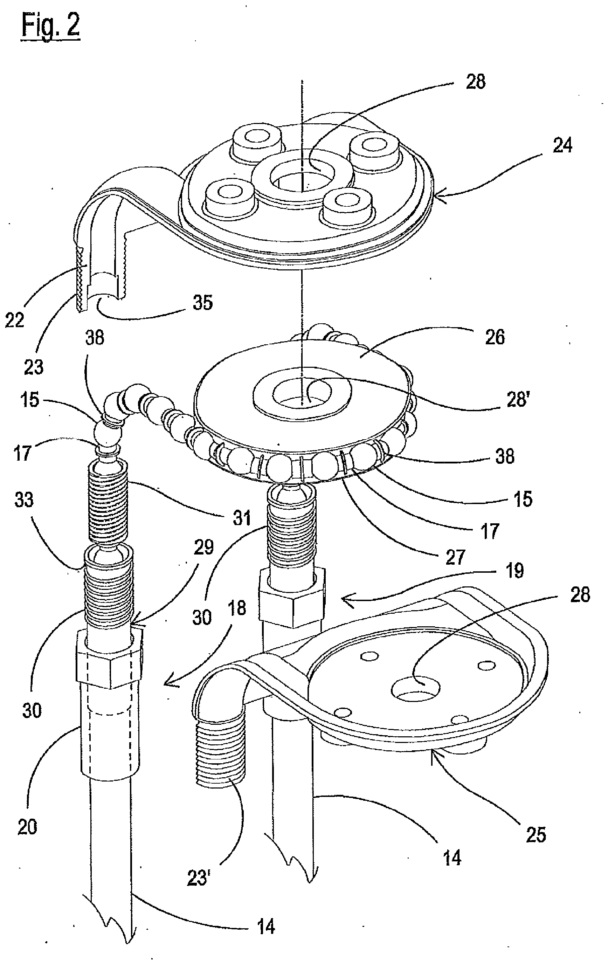

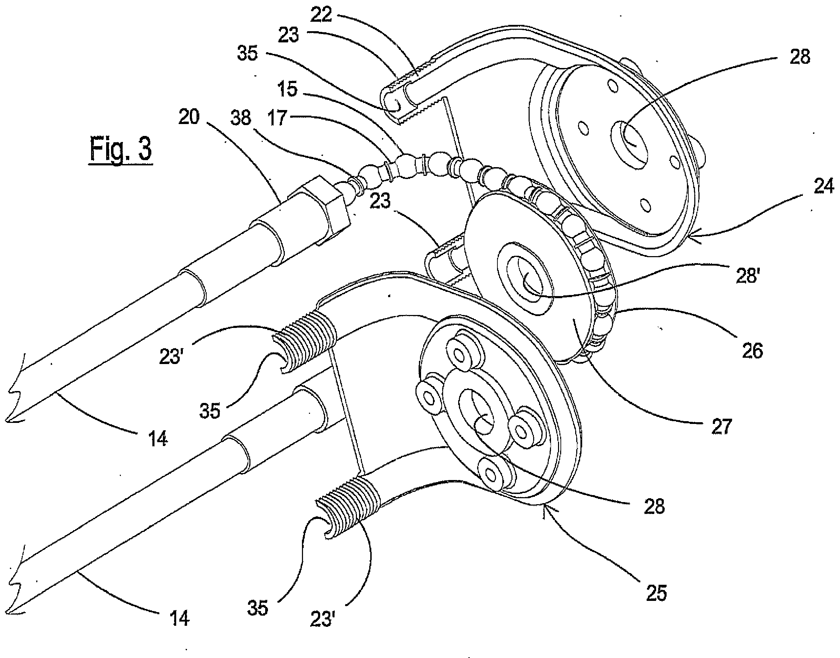

- figures 2 and 3 show enlarged perspective views of details of the transmission of figure 1, also partially exploded;
- figure 4 shows an enlarged section of a portion of transmission according to the present invention in which a compensator is envisaged;

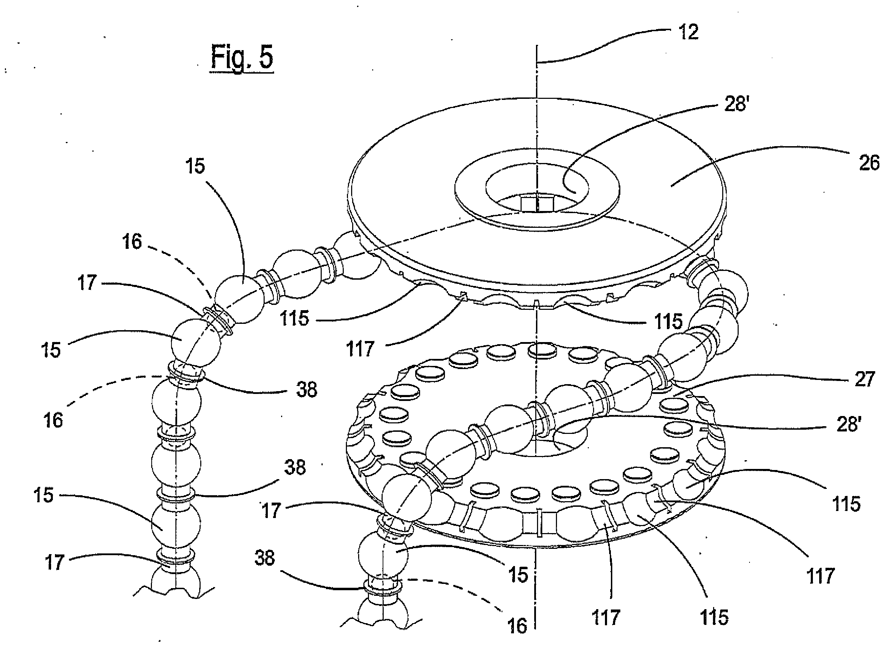

- figure 5 shows an exploded enlarged perspective view of a portion of transmission of the invention in correspondence with a pulley and relative spherical elements and cylindrical elements;
- figure 6 shows an enlarged section of a portion of transmission according to the present invention comprising the connection between portions of the tubular container or sheath and the box-like element containing a pulley;
- figure 7 shows an alternative embodiment of a transmission according to the present invention for the transformation of a rotary driving motion into an alternative linear motion.

With reference to the figures, these illustrate in a series of its applications, through various details, a universal flexible transmission according to the present invention.

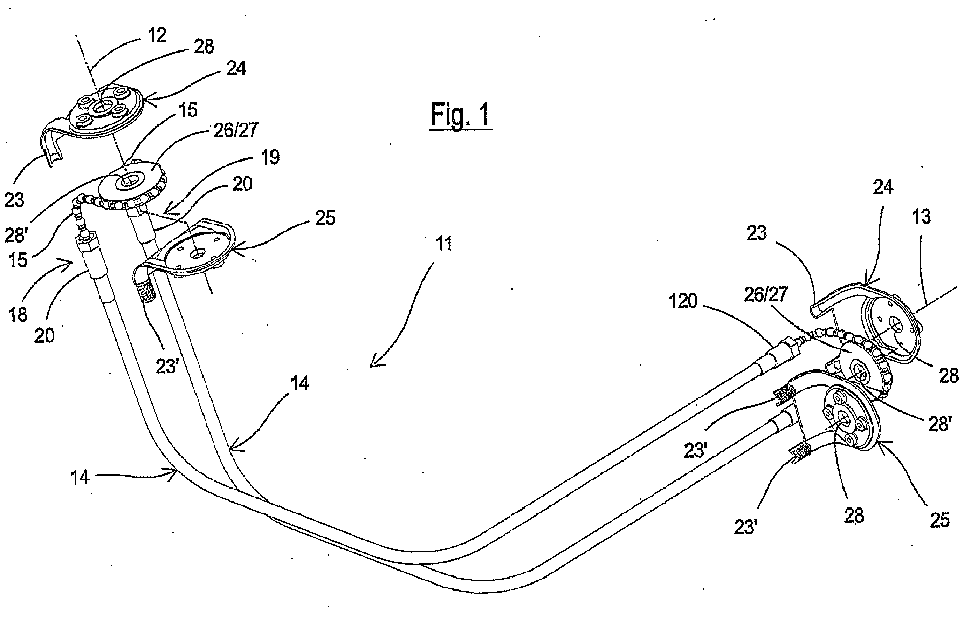

In the embodiment shown in figure 1, a universal flexible transmission 11 according to the present invention is capable of transferring a continuous rotary motion, from a rotary driving axis 12, oriented in a generic direction in space, to a rotary driven axis 13, also oriented in a further generic position in space. The rotary driving axis 12 can be connected to a motor (not shown) whereas the rotary driven axis 13 can be connected to an actuation shaft of a rotary movement of a user (not shown).

The transmission 11 shown, essentially comprises sections of tubular container 14, such as parts of a sheath, arranged as a closed ring, in which first spherical elements 15, having a first diameter, are positioned, with which second spherical elements 16, having a second diameter, smaller than that of the first spherical elements 15, are intercalated.

The first spherical elements 15, having a larger diameter with respect to the second spherical elements 16, have an outer diameter slightly smaller than the internal diameter of the tubular container or sheath 14, in which they are induced to slide and roll.

A spacer cylindrical body 17 is also positioned between two consecutive elements 15. Said cylindrical body 17 has a longitudinal dimension slightly shorter by a few tenths or less with respect to the outer diameter of the above-mentioned second spherical elements 16. In this way, each cylindrical body 17 allows the second spherical elements 16 to transfer the load to the first spherical elements 15 and roll idly with respect to these.

It should also be pointed out that the cylindrical bodies 17 carry an annular flange or wing 38 on their external surface, radially protruding outwardly, which serves to keep them centered with respect to the first spherical elements 15 between which they are positioned. These cylindrical bodies 17 may in fact move, in curved portions of the tubular container or sheath 14, from a correct aligned position with respect to the centres of subsequent spherical elements 15.

The annular flange or wing 38, moreover, serves at the moment of assembly, to ensure that the alignment geometry between the various elements is always the same and correct in a rest phase or should there be a detachment between the subsequent spherical elements 15, 16 for some reason.

The presence of cylindrical bodies 17 provided with an annular flange or wing 38 guarantees this correct alignment and a correct sequence between the parts, regardless of the type of course or positioning the tubular container or sheath 14 acquires in the space for connecting a driving point with a driven point, composed of the two axes 12 and 13 in the example of figure 1.

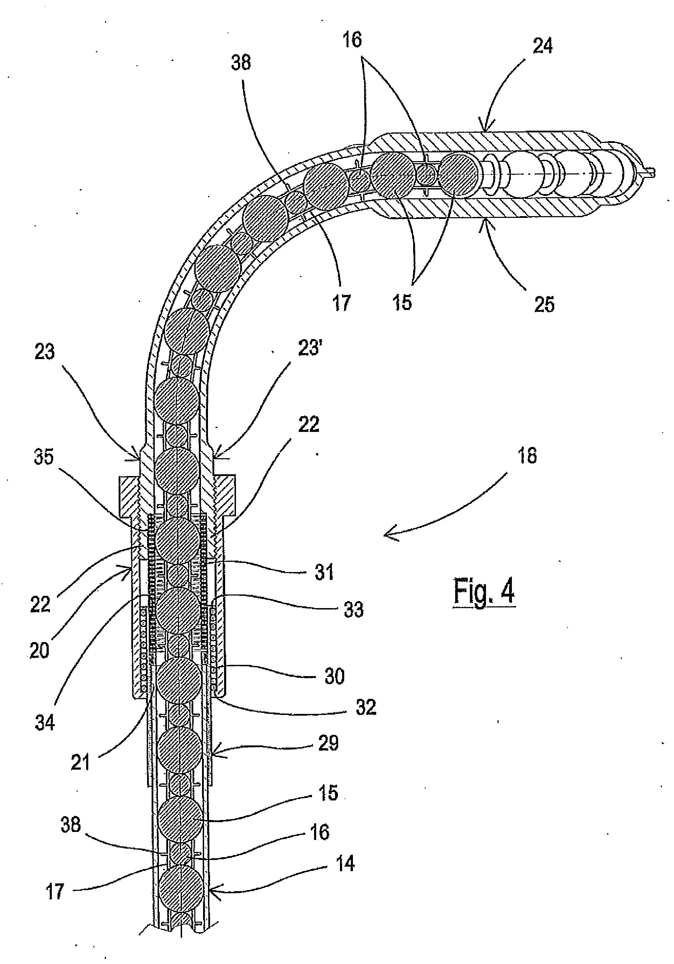

In the example illustrated, there is also the presence of two mechanical compensators 18, 19, one for each forward and backward branch, illustrated in figure 4, in one of its non-limiting embodiments. Said mechanical compensators 18, 19, each consist of an outer sleeve 20 positioned for containing a terminal portion 21 of the tubular container or sheath 14, and a terminal portion 22 of each half of a connection 23, 23' of a box-like element 24, 25, to the section of tubular container or sheath 14. The hollow box-like element 24, in fact, forms a half, together with a further complementary hollow box-like element 25, also provided with half of a connection 23', of a casing connected to sections of the tubular container or sheath 14. Said casing 24, 25 contains and creates a housing for a pulley, rotating and free to rotate (in this case driving), produced in two halves 26, 27, where there is a hole 28, which houses for example the driving axis 12 of the transmission. Analogously, a second casing is also envisaged which comprises two complementary box-like elements 24 and 25 which can be coupled to contain a further compound pulley 26, 27, also rotating and free to rotate (in this case driven), where there is a hole 28 which houses, for example, the driven axis 13 of the transmission.

Each compound pulley 26, 27 comprises two discoidal bodies, centrally perforated in 28', whose facing surfaces are provided with half of peripheral grooves 115 and 117, suitable for receiving the first spherical elements 15 and the cylindrical bodies 17 arranged consecutively. The positioning of the above-mentioned first spherical elements 15 and the cylindrical bodies 17, arranged consecutively, in the complete grooves 115 and 117 formed by the two juxtaposed halves of the pulley, is such that the rotation of the pulley thus formed entrains and causes the first spherical elements 15 and the cylindrical bodies 17 arranged one after another, to advance, inside the tubular container or sheath 14, and also the second driven pulley 26, 27 and the compensators 18, 19.

More specifically, the outer sleeve 20 is screwed at a first end onto the terminal portion 22 of the complete connection 23, 23' of the box-like element 24, 25 as a casing so as to be connected to it and comprises in its interior an intermediate grooved abutment element 29 which cooperates with a spring 30 and a containment element 31, which is extendable and to some extent also elastic.

The spring 30, for example made of steel, interacts on the one hand with an abutment 32 situated at a second end of the sleeve 20, and on the other hand, with a radial annular extension 33 towards the outside of the intermediate abutment element 29.

The containment element 31 interacts contained and also elastically extendable, with an internal coaxial annular housing 34 situated inside the grooved abutment element 29 and a coaxial annular groove 35 situated at the end of the terminal portion 22 of the connection 23, 23' of the complete box-like element 24, 25 as indicated above.

Said containment element 31 is in fact a jacket of the spiral type having a square section with an internal diameter equal to that of the sheath or tubular element 14 which, thanks to its lengthening and/or shortening guides the spherical elements and also the spacer cylindrical body 17.

In this way, said compensators 18, 19, which can be identical or very similar, exert their action so as to absorb variations in length between the tubular elements or sheaths and all the first and second spherical elements 15, 16 of the transmission.

Furthermore, the compensators 18, 19 serve to guarantee the continuous contact between all the spherical elements 15, 16 so that clearances are never re-created during the inversion of the motion. It is, in fact, important to always guarantee the perfect engagement of the flow of spherical elements in the driving and driven pulleys 26, 27 of the transmission, previously indicated.

At least one compensator, either 18 or 19, is in fact certainly necessary, which could in itself be sufficient for exerting its function for the whole transmission of the invention. It should also be pointed out that the compensator or compensators may alternatively not be mechanical, as those illustrated and described, but can also be fluid-dynamic units with the same functions described above.

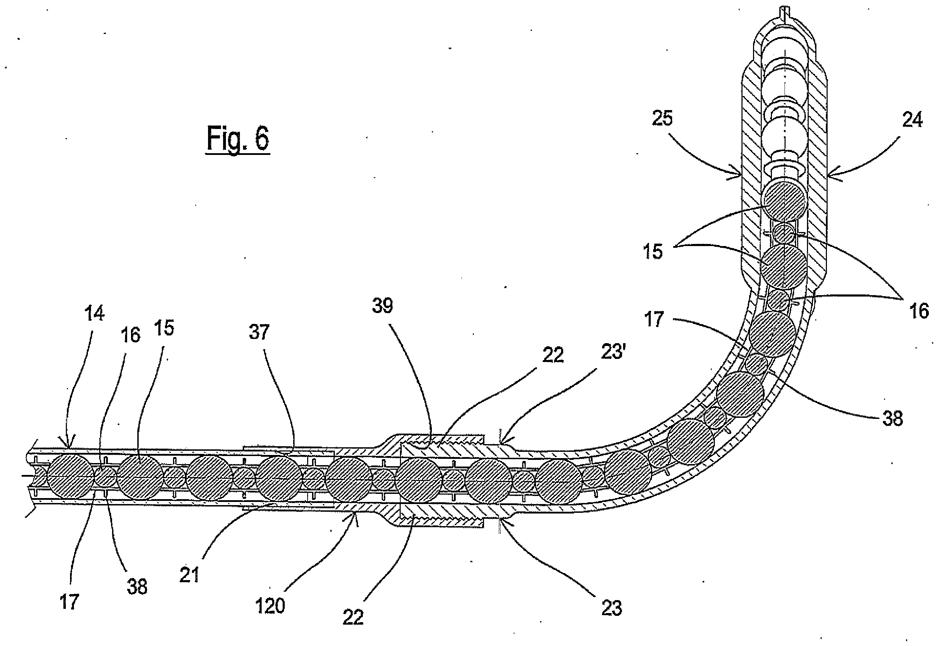

As shown in figures 1 and 6, where compensators are not envisaged, there is a connection between the box-like element 24, 25 and the tubular container or sheath 14 by means of an outer sleeve 120 positioned for containing a terminal portion 21 of the tubular container or sheath 14 and the end portion of each half of the connection 23, 23' of the box-like element 24, 25. Both the terminal portion 21 of the tubular container or sheath 14 and the end portion of each half of the connection 23, 23' of the box-like element 24, 25 are contained in appropriate housings 37 and 39 of the sleeve 120.

It should also be pointed out that, according to the present invention, a lubricant such as transmission oil or another similar lubricant, for example gear lubricant, is contained inside sections of the tubular container or sheath 14 and also the casing formed by the two hollow box-like elements 24, 25 and the two compensators 18, 19. This lubricant intervenes with an increase in the flow-rate of balls, creating a limit layer of lubricant, less than a hundredth, between the moving parts.

A lubricant is therefore entrapped in the composite cavity thus defined in contact with the spherical elements and cylindrical bodies 17 equipped with an annular flange or wing 38 in movement, creating almost a composite chain transmission element consisting of consecutive juxtaposed unconstrained parts.

When this limit layer of lubricant intervenes between the parts in movement, the spherical elements 15, 16 no longer roll, or they maintain only reduced and partial rotations, sliding on the film of lubricant thus formed. When the hydrodynamic pressure of the lubricant is reduced with a reduction in the velocity, the dynamic limit layer of lubricant breaks and reacquires the prevalent rolling movement.

It can be seen how this transmission has been described for transmitting a rotary movement from a first axis to a second axis.

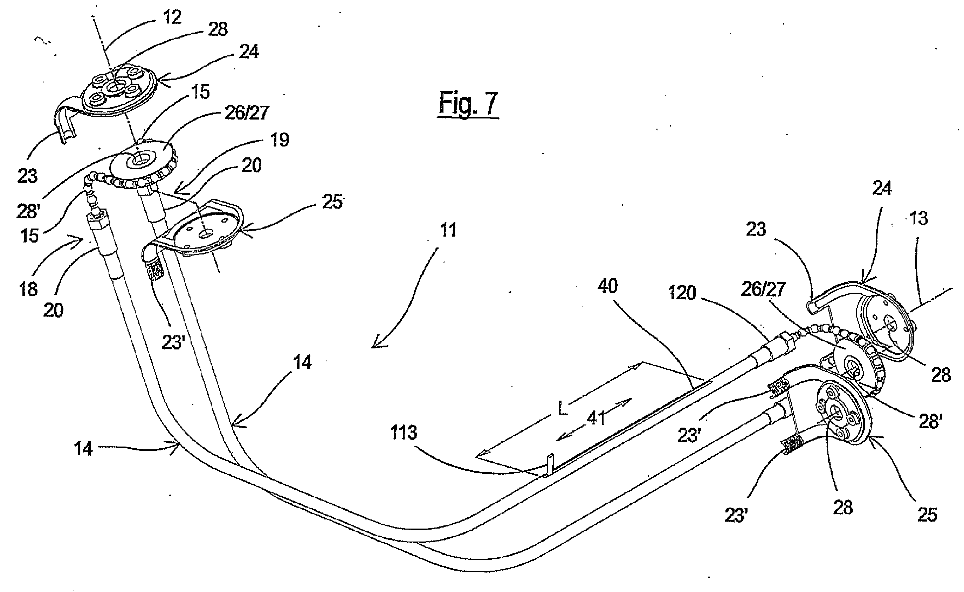

This transmission, moreover, is valid and can be used, as schematized in figure 7, as transmission from a rotating driving axis 12 to a translating driven point, in the form of a sliding pin 113.

The pin 113 can move linearly in any direction, not parallel or perpendicular to the driving axis 12, but in any case, for example, forwards and backwards. In figure 7, which is purely illustrative but non-limiting, the pin 113 seal-protrudes from the tubular container or sheath 14 or rather from one of its longitudinal notches 40, with the possibility of moving according to the arrow 41 forwards and backwards in the notch 40 and entraining any external element to be controlled for a section of movement L.

In this case, the rotating driven axis 13 shown for the first example of figure 1, is substituted by a point 113 which can move linearly or in any case according to any direction in a section of the tubular container or sheath 114.

It can therefore be seen how the transfer of motion takes place according to the invention in the absence of free play (should a sudden inversion of motion be required) and with high mechanical performances (much higher than those of gear transmissions).

All of this with a minimum elastic dispersion.

The driving axis 12 and driven axis 13 can move reciprocally. The axis 12, for example, on a body of a vehicle and the axis 13 on the chassis, wherein the body is suspended on the chassis by means of suspensions.

The rotary motion thus carried or transferred can be continuous or alternating, thanks to the present invention.

By way of example, the movement can be included within an extremely variable velocity range: very slow (1, 2 revs/minute) or fast (over 1,000 revs/minute).

In very slow regimes, the transmission of the invention transfers motion through rolling elements such as the above-mentioned spherical elements with a strictly mechanical functioning. With an increase in the velocity, the lubrication "mechanism" mentioned above intervenes, i.e. the lubricant therein as indicated above, acting almost with fluid-dynamic behaviour.

In both cases, the mechanical performances of the motion remain extremely high, regardless of or almost regardless of the distance between the axes 12 and 13 and complexity of the course for connecting them.

Furthermore, the input motion can be increased or decreased at the output in a transmission ratio, therefore also not necessarily a ratio 1:1. The driven gear can, for example, have a smaller or larger diameter than the diameter of the driving gear.

It has been advantageously seen that the presence of two mechanical compensators (one for each branch of the transmission), or at least one in certain simplified cases, allows variations in length to be absorbed between the tubular containers or sheaths and the "chain of balls" and other connection and centering elements, if present.

It should also be pointed out that the compensators 18, 19 indicated above serve to guarantee continuous contact between all the balls or spherical elements or "complete series" so that clearances never re-arise during the reverse motion. These compensators 18, 19, moreover, are quite important for always ensuring the perfect engagement of the flow of balls or spherical elements in the wheels or driving and driven pulleys of the transmission of the present invention, which guarantee the movement of the transmission.

In the case of overloading, the compensators 18, 19, yield elastically, overcoming the preloading of at least the spring 30, and pass to a situation of internal stoppage.

In particular, the compensator 18 of the driving or forward branch yields elastically until it stops. At this point, the load transferred by the balls or spherical elements can be increased under the action of an accidental driving torque applied to the driving pulley 26, 27. The other compensator 19 (that on the driven or return branch) contracts, annulling the spaces which would otherwise be created between the balls or spherical elements 15, 16, due to the yielding of the first compensator 18 (that on the driving branch).

The transmission according to the invention does not need to be screened as is the case, on the contrary, for belt, chain and gear transmissions, thanks to the substantial presence of totally closed constituent elements such as the tubular container or sheath forming it, in addition to the hollow box-like elements 24, 25 and two compensators 18, 19, if both are present.

The transmission according to the invention functions well, even if positioned in water, as it never oxidizes, once possible seals have been arranged between the coupling parts.

Furthermore, the transmission of the invention is extremely quiet thanks to its structural composition and it is always lubricated.

In more or less simplified alternative embodiments, the spherical elements 15, 16 can all have the same diameter and not comprise the alternation of hollow cylindrical bodies for containing the spherical elements. In a further alternative embodiment, two types of spherical elements having a different diameter can be envisaged, positioned directly in contact with each other, also in this case, without the presence of hollow cylindrical bodies.

Furthermore, in addition to the presence of hollow cylindrical bodies containing the balls, a further embodiment can be envisaged in which cylindrical bodies are positioned alternating with the spherical elements. In this case, the spherical elements are free to rotate with respect to the cylindrical bodies with which they are in contact and with respect to the section of tubular container or sheath 14.

The cylindrical bodies can be full, and not hollow as for those previously described, for example made of plastic for damping the vibrations, with polymers having a varying hardness or material sintered with oil for facilitating the rolling of the balls on the same and inside the tubular container or sheath.

The presence of elements having a different form and/or different material, such as polymers or plastic materials, advantageously allows possible vibrations to be dampened, which can arise during the functioning or during reverse motion.

All the main features forming part of the invention can be found in all of these non-limiting examples.

According to the invention, all of the objectives at the basis of the invention have therefore been achieved.

All the objectives mentioned in the preamble of the description have therefore been achieved.

The forms of the structure for producing a transmission of the invention, as also the materials and assembly modes, can naturally differ from those shown for purely illustrative and non-limiting purposes in the drawings.

The protection scope of the present invention is therefore delimited by the enclosed claims.

## Claims

1. A universal flexible transmission for the transmission of motion from a rotary driving axis to a distant point which can be moved in any direction, non-parallel or perpendicular to the driving axis, in a linear or rotating direction, wherein said transmission comprises at least one tubular container (14) which extends between a rotary driving axis (12) and a rotating or translating guided point (13, 113), said at least one tubular container (14) containing spherical elements (15, 16) in contact with each other, there also being a pulley (26, 27), in correspondence with said rotary driving axis (12), contained, free to rotate, in a box-like element (24, 25) and provided with peripheral grooves (115, 117) suitable for receiving said spherical elements (15, 16), so as to entrain them and cause them to advance with its rotation, both in its interior and in the interior of at least one tubular container (14), at least one compensator (18, 19) also being envisaged, which guarantees the continuous contact between said spherical elements (15, 16) during their linear or rotating or alternating backward and forward movement, wherein said spherical elements comprise a plurality of first spherical elements (15), having an outer diameter close to the internal diameter of said container (14), alternating with second spherical elements (16) of a plurality second spherical elements (16), having a smaller outer diameter with respect to that of the first spherical elements (15), **characterized in that** each of said second spherical elements (16) is contained in a hollow cylindrical body (17) which has a longitudinal dimension slightly shorter with respect to the outer diameter of said second spherical elements (16).

2. The transmission according to claim 1, **characterized in that** it comprises a second pulley (26, 27), contained, free to rotate, in a second box-like element (24, 25) also provided with peripheral grooves (115, 117), suitable for receiving said spherical elements (15, 16), said second box-like element (24, 25) being connected to the first box-like element (24, 25) by at least a further tubular container (14).

3. The transmission according to claim 1 or 2, **characterized in that** said second pulley (26, 27) is positioned in correspondence with said guided point which consists of a rotating axis (13).

4. The transmission according to claim 1 or 2, **characterized in that** said guided point consists of a pin (113) linearly movable in any direction, not parallel or perpendicular to the driving axis (12), with respect to at least a section of tubular container or sheath (14).

5. The transmission according to claim 4, **characterized in that** said pin (113) protrudes from a longitudinal notch (40) of said at least a section of tubular container or sheath (14), with the possibility of translating backwards and forwards in the notch (40).

6. The transmission according to one or more of the previous claims, **characterized in that** cylindrical bodies (17) are positioned alternating with said spherical elements (15, 16), wherein said spherical elements (15, 16) are free to rotate with respect to said cylindrical bodies (17) with which they are in contact and with a section of tubular container or sheath (14).

7. The transmission according to claim 1 or 2, **characterized in that** each of said first and second pulleys consists of two discoidal bodies, perforated in the centre, (in 28'), whose surfaces, facing each other, are provided with a half of said peripheral grooves (115, 117) suitable for receiving at least said spherical elements (15, 16).

8. The transmission according to claim 1, **characterized in that** each of said first and second pulleys consists of two discoidal bodies, perforated in the centre (in 28'), whose surfaces, facing each other, are provided with a half of said peripheral grooves (115, 117) suitable for receiving at least said spherical elements (15, 16) having different diameters.

9. The transmission according to claim 1, **characterized in that** each of said first and second pulleys consists of two discoidal bodies, perforated in the centre (in 28'), whose surfaces, facing each other, are provided with a half of said peripheral grooves (115, 117) suitable for receiving at least said spherical elements (15, 16) having different diameters and said cylindrical bodies (17).

10. The transmission according to one or more of the previous claims, **characterized in that** it comprises a second compensator (19) in addition to said first compensator (18), wherein said first compensator (18) is positioned on an forward branch of said tubular container (14) and said second compensator (19) is positioned on a return branch (14) of said tubular container (14).

11. The transmission according to one or more of the previous claims 7, 8 or 9, **characterized in that** each of said cylindrical bodies (17) carries on its outer surface an annular flange or wing (38), protruding radially outwardly.

12. The transmission according to one or more of the previous claims, **characterized in that** a lubricant is contained inside sections of the tubular container (14), of said box-like element (24,25) and said at least one compensator (18, 19).

13. The transmission according to claim 12, **characterized in that** said lubricant is transmission oil or another similar lubricant, and intervenes with an increase in the slip flow-rate of the spheres, creating a lubricating limit layer, less than a hundredth, between the moving parts.

14. The transmission according to one or more of the previous claims, **characterized in that** said box-like element consists of two complementary halves (24, 25), coupled with each other, and which extends outwardly into at least one connection (23), also in two halves, for a terminal section of a tubular container or sheath (14).

15. The transmission according to one or more of the previous claims, **characterized in that** said at least one compensator (18, 19) consists of an outer sleeve (20) positioned for containing a terminal portion (21) of a section of tubular container or sheath (14) and a terminal portion (22) of each of the two halves of a connection (23, 23') of a box-like element (24, 25), so as to create a connection with the section of tubular container or sheath (14) with the interpositioning of at least one elastic element (30).

16. The transmission according to claim 15, **characterized in that** said outer sleeve (20) comprises in its interior, an intermediate grooved abutment element (29) which cooperates with said elastic element which is a spring (30) and an extendable containment element (31), wherein said spring (30) interacts on the one hand, with an abutment (32) situated at a second end of the sleeve (20) and on the other hand, with a radial annular extension (33) towards the outside of the intermediate abutment element (29), whereas said extendable containment element (31) interacts with an inner coaxial annular housing (34) situated inside the intermediate grooved abutment element (29) and a coaxial annular groove (35) situated at the end of the terminal portion of the box-like element (24, 25).

## Patentansprüche

1. Universelles flexibles Getriebe für die Übertragung von Bewegung von einer Drehantriebsachse zu einem distalen Punkt, der in jede Richtung, nicht parallel oder senkrecht zu der Antriebsachse, in einer linearen oder rotierenden Richtung bewegt werden kann, wobei das Getriebe zumindest einen rohrförmigen Behälter (14) umfasst, der sich zwischen einer Drehantriebsachse (12) und einem rotierenden oder verschieblichen geführten Punkt (13, 113) erstreckt, wobei der zumindest einen rohrförmigen Behälter (14) kugelförmige Elemente (15, 16) in Kontakt miteinander enthält, wobei auch eine Rolle (26, 27) in Übereinstimmung mit der Drehantriebsachse (12) vorgesehen ist, die frei drehbar in einem kastenartigen Element (24, 25) enthalten ist und mit Umfangsnuten (115, 117) versehen ist, die geeignet sind, die kugelförmigen Elemente (15, 16) aufzunehmen, um diese mitzuschleppen und zu bewirken, dass diese mit ihrer Rotation sowohl in ihrem Inneren als auch im Inneren von zumindest einem rohrförmigen Behälter (14) vorrücken, wobei auch zumindest ein Kompensator (18, 19) vorgesehen ist, der den kontinuierlichen Kontakt zwischen den kugelförmigen Elementen (15, 16) während ihrer linearen oder rotierenden oder alternierenden Rückwärts- und Vorwärtsbewegung gewährleistet, wobei die kugelförmigen Elemente eine Mehrzahl von ersten kugelförmigen Elementen (15) umfassen, die einen Außendurchmesser nahe bei dem Innendurchmesser des Behälters (14) aufweisen, abwechselnd mit zweiten kugelförmigen Elementen (16) einer Mehrzahl von zweiten kugelförmigen Elementen (16), die einen kleineren Außendurchmesser mit Bezug auf den der ersten kugelförmigen Elemente (15) aufweisen, **dadurch gekennzeichnet, dass** ein jedes der zweiten kugelförmigen Elemente (16) in einem hohlen zylindrischen Körper (17) enthalten ist, der eine Längsabmessung aufweist, die geringfügig kürzer mit Bezug auf den Außendurchmesser der zweiten kugelförmigen Elemente (16) ist.

2. Getriebe nach Anspruch 1, **dadurch gekennzeichnet, dass** es eine zweite Rolle (26, 27) umfasst, die frei drehbar in einem zweiten kastenartigen Element (24, 25) enthalten ist und ebenfalls mit Umfangsnuten (115, 117) versehen ist, die geeignet sind, um die kugelförmigen Elemente (15, 16) aufzunehmen, wobei das zweite kastenartige Element (24, 25) mit dem ersten kastenartigen Element (24, 25) durch zumindest einen weiteren rohrförmigen Behälter (14) verbunden ist.

3. Getriebe nach Anspruch 1 oder 2, **dadurch gekennzeichnet, dass** die zweite Rolle (26, 27) in Übereinstimmung mit dem geführten Punkt angeordnet ist, der aus einer Drehachse (13) besteht.

4. Getriebe nach Anspruch 1 oder 2, **dadurch gekennzeichnet, dass** der geführte Punkt aus einem Stift (113) besteht, der in jede Richtung, nicht parallel oder senkrecht zu der Antriebsachse (12) mit Bezug auf zumindest ein Teilstück des rohrförmigen Behälters oder Mantels (14) linear beweglich ist.

5. Getriebe nach Anspruch 4, **dadurch gekennzeichnet, dass** der Stift (113) von einer Längskerbe (40) des zumindest einen Teilstücks des rohrförmigen Behälters oder Mantels (14) mit der Möglichkeit einer Verschiebung rückwärts und vorwärts in der Kerbe (40) vorsteht.

6. Getriebe nach einem oder mehreren der vorhergehenden Ansprüche, **dadurch gekennzeichnet, dass** zylindrische Körper (17) abwechselnd mit den kugelförmigen Elementen (15, 16) angeordnet sind, wobei die kugelförmigen Elemente (15, 16) frei sind, mit Bezug auf die zylindrischen Körper (17), mit welchen sie in Kontakt stehen, und mit einem Teilstück des rohrförmigen Behälters oder Mantels (14) zu rotieren.

7. Getriebe nach Anspruch 1 oder 2, **dadurch gekennzeichnet, dass** eine jede von der ersten und zweiten Rolle aus zwei scheibenförmigen Körpern besteht, die im Zentrum (in 28') perforiert sind, deren Oberflächen, die einander zugewandt sind, mit einer Hälfte der Umfangsnuten (115, 117) versehen sind, die geeignet sind, zumindest die kugelförmigen Elemente (15, 16) aufzunehmen.

8. Getriebe nach Anspruch 1, **dadurch gekennzeichnet, dass** eine jede von der ersten und zweiten Rolle aus zwei scheibenförmigen Körpern besteht, die im Zentrum (in 28') perforiert sind, deren Oberflächen, die einander zugewandt sind, mit einer Hälfte der Umfangsnuten (115, 117) versehen sind, die geeignet sind, zumindest die kugelförmigen Elemente (15, 16), die unterschiedliche Durchmesser aufweisen, aufzunehmen.

9. Getriebe nach Anspruch 1, **dadurch gekennzeichnet, dass** eine jede von der ersten und zweiten Rolle aus zwei scheibenförmigen Körpern besteht, die im Zentrum (in 28') perforiert sind, deren Oberflächen, die einander zugewandt sind, mit einer Hälfte der Umfangsnuten (115, 117) versehen sind, die geeignet sind, zumindest die kugelförmigen Elemente (15, 16), die unterschiedliche Durchmesser aufweisen, und die zylindrischen Körper (17) aufzunehmen.

10. Getriebe nach einem oder mehreren der vorstehenden Ansprüche, **dadurch gekennzeichnet, dass** es einen zweiten Kompensator (19) zusätzlich zu dem ersten Kompensator (18) umfasst, wobei die erste Kompensator (18) an einem Vorwärtszweig des rohrförmigen Behälters (14) angeordnet ist, und der zweite Kompensator (19) an einem Rückwärtszweig (14) des rohrförmigen Behälters (14) angeordnet ist.

11. Getriebe nach einem oder mehreren der vorhergehenden Ansprüche 7, 8 oder 9, **dadurch gekennzeichnet, dass** ein jeder von den zylindrischen Körpern (17) an seiner Außenfläche einen ringförmigen Flansch oder Schenkel (38) trägt, der radial nach außen vorsteht.

12. Getriebe nach einem oder mehreren der vorhergehenden Ansprüche, **dadurch gekennzeichnet, dass** ein Schmiermittel innerhalb von Teilstücken des rohrförmigen Behälters (14), des kastenartigen Elements (24, 25) und des zumindest einen Kompensator (18, 19) enthalten ist.

13. Getriebe nach Anspruch 12, **dadurch gekennzeichnet, dass** das Schmiermittel Getriebeöl oder ein anderes ähnliches Schmiermittel ist und mit einer Zunahme in der Gleitströmungsgeschwindigkeit der Kugeln eingreift, wobei zwischen den sich bewegenden Teilen eine schmierende Grenzschicht geschaffen wird, die weniger als ein Hundertstel beträgt.

14. Getriebe nach einem oder mehreren der vorhergehenden Ansprüche, **dadurch gekennzeichnet, dass** das kastenartigen Element aus zwei komplementären Hälften (24, 25) besteht, die miteinander gekoppelt sind und sich jeweils nach außen in zumindest eine Verbindung (23), auch in zwei Hälften, für ein Endteilstück eines rohrförmigen Behälters oder Mantels (14) erstreckt.

15. Getriebe nach einem oder mehreren der vorhergehenden Ansprüche, **dadurch gekennzeichnet, dass** der zumindest eine Kompensator (18, 19) aus einer äußeren Hülse (20) besteht, die angeordnet ist, um einen Endabschnitt (21) eines Teilstücks des rohrförmigen Behälters oder Mantels (14) und einen Endabschnitt (22) einer jeden der beiden Hälften einer Verbindung (23, 23') eines kastenartigen Elements (24, 25) zu enthalten, um eine Verbindung mit dem Teilstück des rohrförmigen Behälters oder Mantels (14) mit der Anordnung von zumindest einem elastischen Element (30) dazwischen zu schaffen.

16. Getriebe nach Anspruch 15, **dadurch gekennzeichnet, dass** die äußere Hülse (20) in ihrem Inneren ein dazwischenliegendes, mit Nuten versehenes Anschlagelement (29) umfasst, welches mit dem elastischen Element, das eine Feder (30) ist, und einem ausdehnbaren Behältniselement (31) zusammenwirkt, wobei die Feder (30) einerseits mit einem Anschlag (32), der an einem zweiten Ende der Hülse (20) gelegen ist, und andererseits mit einer radialen ringförmigen Verlängerung (33) in Richtung der Außenseite des dazwischenliegenden Anschlagelements (29) zusammenwirkt, wohingegen das ausdehnbare Behältniselement (31) mit einem inneren koaxialen ringförmigen Gehäuse (34), das innerhalb des dazwischenliegenden, mit Nuten versehenen Anschlagelements (29) gelegen ist, und einer koaxialen ringförmigen Nut (35), die an dem Ende des Endabschnitt des kastenartigen Elements (24, 25) gelegen ist, zusammenwirkt.

## Revendications

1. Transmission souple universelle pour la transmission de mouvement d'un axe d'entraînement rotatif à un point distant qui peut être déplacé dans n'importe quelle direction, non-parallèle ou perpendiculaire à l'axe d'entraînement, dans une direction linéaire ou de rotation, ladite transmission comprenant au moins un contenant tubulaire (14) qui s'étend entre un axe d'entraînement rotatif (12) et un point guidé en rotation ou en translation (13, 113), ledit au moins un contenant tubulaire (14) contenant des éléments sphériques (15, 16) en contact les uns avec les autres, une poulie (26, 27) étant également présente, en correspondance avec ledit axe d'entraînement rotatif (12), contenue, à rotation libre, dans un élément de type boîte (24, 25) et munie de rainures périphériques (115, 117) appropriées pour recevoir lesdits éléments sphériques (15, 16), de façon à les entraîner et les amener à avancer avec sa rotation, à la fois à l'intérieur de celles-ci et à l'intérieur d'au moins un contenant tubulaire (14), au moins un compensateur (18, 19) étant également prévu, qui garantit le contact continu entre lesdits éléments sphériques (15, 16) pendant leur mouvement linéaire ou de rotation ou alterné vers l'arrière et vers l'avant, lesdits éléments sphériques comprenant une pluralité de premiers éléments sphériques (15), ayant un diamètre externe proche du diamètre interne dudit contenant (14), alternés avec des seconds éléments sphériques (16) d'une pluralité de seconds éléments sphériques (16), ayant un diamètre externe plus petit que celui des premiers éléments sphériques (15), **caractérisée par le fait que** chacun desdits seconds éléments sphériques (16) est contenu dans un corps cylindrique creux (17) qui a une dimension longitudinale légèrement plus courte que le diamètre externe desdits seconds éléments sphériques (16).

2. Transmission selon la revendication 1, **caractérisée par le fait qu'**elle comprend une seconde poulie (26, 27) contenue, à rotation libre, dans un second élément de type boîte (24, 25), également munie de rainures périphériques (115, 117), appropriées pour recevoir lesdits éléments sphériques (15, 16), ledit second élément de type boîte (24, 25) étant relié au premier élément de type boîte (24, 25) par au moins un autre contenant tubulaire (14).

3. Transmission selon la revendication 1 ou 2, **caractérisée par le fait que** ladite seconde poulie (26, 27) est positionnée en correspondance avec ledit point guidé qui consiste en un axe de rotation (13).

4. Transmission selon la revendication 1 ou 2, **caractérisée par le fait que** ledit point guidé consiste en une broche (113) mobile de manière linéaire dans n'importe quelle direction, non-parallèle ou perpendiculaire à l'axe d'entraînement (12), par rapport à au moins une section de contenant tubulaire ou de gaine(14).

5. Transmission selon la revendication 4, **caractérisée par le fait que** ladite broche (113) fait saillie à partir d'une encoche longitudinale (40) de ladite au moins une section de contenant tubulaire ou de gaine (14), avec la possibilité de se déplacer en translation vers l'arrière et vers l'avant dans l'encoche (40).

6. Transmission selon une ou plusieurs des revendications précédentes, **caractérisée par le fait que** des corps cylindriques (17) sont positionnés en alternance avec lesdits éléments sphériques (15, 16), lesdits éléments sphériques (15, 16) étant libres de tourner par rapport auxdits corps cylindriques (17) avec lesquels ils sont en contact et avec une section de contenant tubulaire ou de gaine (14).

7. Transmission selon la revendication 1 ou 2, **caractérisée par le fait que** chacune desdites première et seconde poulies consiste en deux corps discoïdes, perforés au centre (en 28'), dont des surfaces, se faisant mutuellement face, sont munies d'une moitié desdites rainures périphériques (115, 117) appropriées pour recevoir au moins lesdits éléments sphériques (15, 16).

8. Transmission selon la revendication 1, **caractérisée par le fait que** chacune desdites première et seconde poulies consiste en deux corps discoïdes, perforés au centre (en 28'), dont des surfaces, se faisant mutuellement face, sont munies d'une moitié desdites rainures périphériques (115, 117) appropriées pour recevoir au moins lesdits éléments sphériques (15, 16) ayant des diamètres différents.

9. Transmission selon la revendication 1, **caractérisée par le fait que** chacune desdites première et seconde poulies consiste en deux corps discoïdes, perforés au centre (en 28'), dont des surfaces, se faisant mutuellement face, sont munies d'une moitié desdites rainures périphériques (115, 117) appropriées pour recevoir au moins lesdits éléments sphériques (15, 16) ayant des diamètres différents et lesdits corps cylindriques (17).

10. Transmission selon une ou plusieurs des revendications précédentes, **caractérisée par le fait qu'**elle comprend un second compensateur (19) en plus dudit premier compensateur (18), ledit premier compensateur (18) étant positionné sur une section avant dudit contenant tubulaire (14) et ledit second compensateur (19) étant positionné sur une section de retour (14) dudit contenant tubulaire (14).

11. Transmission selon une ou plusieurs des revendications 7, 8 ou 9, **caractérisée par le fait que** chacun desdits corps cylindriques (17) porte, sur sa surface externe, une bride ou ailette annulaire (38), faisant saillie radialement vers l'extérieur.

12. Transmission selon une ou plusieurs des revendications précédentes, **caractérisée par le fait qu'**un lubrifiant est contenu à l'intérieur de sections du contenant tubulaire (14), dudit élément de type boîte (24, 25) et dudit au moins un compensateur (18, 19).

13. Transmission selon la revendication 12, **caractérisée par le fait que** ledit lubrifiant est de l'huile de transmission ou autre lubrifiant similaire, et intervient avec une augmentation du débit de glissement des sphères, créant une couche limite de lubrification, de moins d'un centième, entre les parties en mouvement.

14. Transmission selon une ou plusieurs des revendications précédentes, **caractérisée par le fait que** ledit élément de type boîte consiste en deux moitiés complémentaires (24, 25), couplées l'une à l'autre, et qui s'étend vers l'extérieur dans au moins un raccordement (23), également en deux moitiés, pour une section terminale d'un contenant tubulaire ou d'une gaine (14).

15. Transmission selon une ou plusieurs des revendications précédentes, **caractérisée par le fait que** ledit au moins un compensateur (18, 19) consiste en un manchon externe (20) positionné pour contenir une partie terminale (21) d'une section de contenant tubulaire ou de gaine (14) et une partie terminale (22) de chacune des deux moitiés d'un raccordement (23, 23') d'un élément de type boîte (24, 25), de façon à créer un raccordement avec la section de contenant tubulaire ou de gaine (14) avec l'interposition d'au moins un élément élastique (30).

16. Transmission selon la revendication 15, **caractérisée par le fait que** ledit manchon externe (20) comprend, dans son intérieur, un élément de butée rainuré intermédiaire (29) qui coopère avec ledit élément élastique qui est un ressort (30) et un élément de confinement extensible (31), ledit ressort (30) interagissant, d'une part, avec une butée (32) située à une seconde extrémité du manchon (20) et, d'autre part, avec une extension annulaire radiale (33) vers l'extérieur de l'élément de butée intermédiaire (29), tandis que ledit élément de confinement extensible (31) interagit avec un boîtier annulaire coaxial interne (34) situé à l'intérieur de l'élément de butée rainuré intermédiaire (29) et une rainure annulaire coaxiale (35) située à l'extrémité de la partie terminale de l'élément de type boîte (24, 25).
